# EUROPÄISCHE PATENTSCHRIFT

(11) **EP 2 042 702 B1**
(45) Veröffentlichungstag und Bekanntmachung des Hinweises auf die Patenterteilung: **07.04.2010**
(21) Anmeldenummer: 08015763.9
(22) Anmeldetag: 06.09.2008
(51) Int. Cl.: F01N 13/18, F16L 27/11, F16L 27/111, F16L 51/02, F16L 55/033

(54) **Dämpfungsanordnung**
Dampening assembly
Dispositif d'amortissement

(30) Priorität: 27.09.2007 DE 202007013516 U
(43) Veröffentlichungstag der Anmeldung: 01.04.2009
(73) Patentinhaber: Witzenmann GmbH, 75175 Pforzheim (DE)
(72) Erfinder: Hornung, Jörg, 75248 Ölbronn-Dürrn (DE); Martinek, Frank, 71665 Vaihingen/Enz (DE); Pluschke, Michael, 75305 Neuenbürg (DE)
(74) Vertreter: Lemcke, Brommer & Partner

(56) Entgegenhaltungen:
- EP-A- 0 657 683
- EP-A- 0 747 582
- EP-A- 0 771 992
- EP-A- 0 859 134
- EP-A- 1 026 375
- EP-A- 1 674 685
- DE-A1- 3 343 967
- DE-A1- 19 548 123
- DE-A1-102006 039 230
- GB-A- 1 328 792
- GB-A- 2 016 628
- NL-A- 7 701 725
- US-A- 3 633 945

## Beschreibung

Die vorliegende Erfindung betrifft eine Dämpfungsanordnung für eine Abgasanlage, insbesondere eines Kraftfahrzeugs, mit einem metallischen Balg zum Verbinden von Leitungsteilen der Abgasanlage und mit einem Dämpfungselement, das den Balg zumindest abschnittsweise umgibt und das für eine Dämpfung von Schwingungen des Balgs durch Reibung an dem Balg ausgebildet ist, wobei das Dämpfungselement in Umfangsrichtung und/oder in Längsrichtung des Balgs an wenigstens einer Teilungsstelle unter Schaffung wenigstens einer Unterbrechung des Dämpfungselements und ggf. unter Schaffung einer Mehrzahl von Einzeldämpfungselementen geteilt ist.

Aus dem Stand der Technik sind Dämpfungsanordnungen für Abgasanlagen bekannt, bei denen metallische Gestrickeringe oder Drahtpressringe zur Bedämpfung von Eigenresonanzen bei Bälgen eingesetzt werden. Um den Balg an mehreren Resonanzstellen bedämpfen zu können, kommen dabei regelmäßig relativ lange Dämpfungselemente zum Einsatz, was Nachteile nicht nur bei den Kosten, sondern auch bei der Herstellung entsprechender Dämpfungsanordnungen bedingt. Dabei ist insbesondere zu berücksichtigen, dass aufgrund von Fertigungstoleranzen der Dämpfungselemente und der Bälge nach dem Stand der Technik nicht immer eine unmittelbar optimale Dämpfungsfunktion gewährleisten ist, die sich im Wesentlichen aufgrund der Reibung zwischen Dämpfungselement und Balgoberfläche ergibt. Es hat sich weiterhin gezeigt, dass im Betrieb der Dämpfungsanordnung aufgrund von Wärmezufuhr die zuvor im kalten Zustand auf dem Balg beweglichen Dämpfungselemente unbeweglich wurden, was zu einem Verlust der Dämpfungsfunktion führt.

Eine gattungsgemäße Dämpfungsanordnung ist beispielsweise aus der DE 195 48 123 A1 bekannt. Die genannte Druckschrift offenbart ein flexibles Leitungselement in der Abgasanlage einer Brennkraftmaschine, wobei ein Wellschlauch an seinen Anschlussenden durch voneinander beabstandete Formteile aus einem Dämpfungsmaterial bedämpft ist.

Die EP 0 771 992 A1 offenbart einen metallischen Wellschlauch, auf dem zu Dämpfungszwecken ein einzelnes ringförmiges Element angeordnet ist.

Aus der EP 0 657 683 A2 ist eine Dämpfungsanordnung für einen metallischen Wellschlauch bekannt, bei der ein ringförmiges Dämpfungselement in den Bereich zwischen zwei Balgwellen eingreift.

Aus der GB 1 328 792 ist ein schellenartiges Dämpfungselement zum Bedämpfen von Rohrleitungen bekannt, das an seiner Innenseite ein elastisches Material aufweist und mittels eines U-förmigen Verbindungselements zu einem Ring schließbar ist.

Der Erfindung liegt die Aufgabe zugrunde, eine Dämpfungsanordnung der eingangs genannten Art dahingehend weiterzuentwickeln, dass sie verbesserte Dämpfungseigenschaften aufweist und dabei einfach und kostengünstig gefertigt werden kann.

Die Aufgabe wird gelöst durch eine Dämpfungsanordnung mit den Merkmalen des Patentanspruchs 1. Vorteilhafte Weiterbildungen der erfindungsgemäßen Dämpfungsanordnung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Dämpfungsanordnung für eine Abgasanlage, insbesondere eines Kraftfahrzeugs, mit einem metallischen Balg zum Verbinden von Leitungsteilen der Abgasanlage und mit einem Dämpfungselement, das den Balg zumindest abschnittsweise umgibt und das für eine Dämpfung von Schwingungen des Balgs durch Reibung an dem Balg ausgebildet ist, wobei das Dämpfungselement in Umfangsrichtung und/oder in Längsrichtung des Balgs an wenigstens einer Teilungsstelle unter Schaffung wenigstens einer Unterbrechung des Dämpfungselements und ggf. unter Schaffung einer Mehrzahl von Einzeldämpfungselementen geteilt ist, dadurch gekennzeichnet, dass an bzw. im Bereich der Teilungsstelle wenigstens ein elastisches Verbindungselement angeordnet ist, das die Unterbrechung des Dämpfungselements überbrückt.

Eine Grundidee der vorliegenden Erfindung besteht demzufolge darin, das Dämpfungselement in Umfangsrichtung, in Längsrichtung oder sowohl, in Umfangsrichtung als auch in Längsrichtung zu teilen, wodurch gegebenenfalls (bei Unterteilung in Längsrichtung des Balgs) eine Mehrzahl von Einzeldämpfungselementen geschaffen werden. Auf diese Weise können kleinere und somit kostengünstigere Dämpfungselemente verwendet werden, die zudem gezielt an Resonanzstellen der Balgschwingung angeordnet werden können, so dass eine effizientere Bedämpfung des Balgs ermöglicht ist. Dabei kann das Dämpfungselement sowohl in Umfangsrichtung als auch in Längsrichtung jeweils einfach oder mehrfach geteilt sein. Durch die elastische Überbrückung der Teilungsstelle lässt sich zudem die Vorspannkraft und damit die Dämpfungswirkung des Dämpfungselements gezielt einstellen.

Das elastische Verbindungselement kann insbesondere als Federelement, beispielsweise als Zug- oder Drehfeder, oder als Teil oder Abschnitt aus einem elastomeren Material gebildet sein. Durch das dadurch erfolgte Einbringen einer zusätzlichen Elastizität in das einfach oder mehrfach geteilte Dämpfungselement kann dessen Vorspannkraft und damit auch die Dämpfungswirkung gezielt eingestellt werden.

Durch die Unterteilung des Dämpfungselements ergibt sich als weiterer Vorteil zusätzlich noch eine Material- und Gewichtsersparnis, was gerade im Kraftfahrzeugbereich von besonderer Bedeutung ist.

Durch die Unterteilung des Dämpfungselements wird zudem die Handhabung bei der Montage desselben auf den Balg wesentlich vereinfacht, weil das Dämpfungselement im Gegensatz zu herkömmlichen einteiligen Dämpfungselementen nicht unter Anwendung großer Kräfte montiert werden muss, was zu einer Beschädigung des Balges, insbesondere aber auch zu einer Beeinträchtigung der Elastizität des Dämpfungselements und somit dessen Dämpfungswirkung führen kann.

Gemäß weiteren Ausgestaltungen des erfindungsgemäßen Dämpfungselements kann das elastische Verbindungselement direkt an dem Dämpfungselement im Bereich der Teilungsstelle bzw. Unterbrechung angeordnet und befestigt sein. Alternativ ist vorgesehen, das Verbindungselement nicht direkt an dem Dämpfungselement, sondern an einem äußeren Fixierungselement zu befestigen, welches als Metallband ausgebildet sein kann und das Dämpfungselement in Umfangsrichtung umgibt. Das genannte Fixierungselement kann auch in Form eines Drahtbügels ausgebildet sein, der durch Einhaken seiner Enden verschlossen wird und an sich schon die Eigenschaften des elastischen Verbindungselements aufweist.

Das Dämpfungselement bzw. die daraus gebildeten Einzeldämpfungselemente können - wie bereits erwähnt - als Gestrickeringe oder Drahtpressringe aus Metall ausgebildet sein. Alternativ oder zusätzlich ist jedoch auch möglich, das Dämpfungselement bzw. wenigstens eines der Einzeldämpfungselemente als nicht metallisches Dämpfungselement aus einem nichtmetallischen Werkstoff auszubilden.

Bei einer weiteren Ausgestaltung der erfindungsgemäßen Dämpfungsanordnung ist das Dämpfungselement bzw. wenigstens eine der Einzeldämpfungselemente an dem Balg festgelegt. Dieses Festlegen kann auf unterschiedliche Weise erfolgen, beispielsweise durch formschlüssiges Einhängen des Dämpfungselements bzw. des Einzeldämpfungselements in eine Wellenstruktur des Balgs, durch Verlöten oder durch Vorsehen entsprechender Festlegungsstrukturen am Balg selbst. Letztere können beispielsweise in Form von radial erhöhten Balgwellen oder zusätzlich auf dem Balg angeordneten Ringstrukturen ausgebildet sein, die den Balg über seinen maximal Außendurchmesser hinaus überragen.

Insbesondere durch den Einsatz externer Elastizitäten an dem Dämpfungselement gemäß Ausgestaltungen der vorliegenden Erfindung können Fertigungstoleranzen des Dämpfungselements des Balges kompensiert werden. Dadurch kann die Dämpfungswirkung der erfindungsgemäßen Dämpfungsanordnung für ein gegebenes zu bedämpfendes System, beispielsweise eine Kfz-Abgasanlage, optimal definiert und eingestellt werden.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: einen Längsschnitt durch eine erste, nicht erfindungsgemäße Aus- gestaltung einer Dämpfungsanordnung;
- Figur 2: einen Längsschnitt durch eine Ausgestaltung der erfindungsgemä- ßen Dämpfungsanordnung;
- Figur 3: einen Längsschnitt durch eine andere Ausgestaltung der erfin- dungsgemäßen Dämpfungsanordnung;
- Figur 4: einen Längsschnitt durch eine weitere Ausgestaltung der erfin- dungsgemäßen Dämpfungsanordnung;
- Figur 5: eine Querschnittsansicht einer Ausgestaltung des Dämpfungsele- ments der erfindungsgemäßen Dämpfungsanordnung;
- Figur 6: eine Querschnittsansicht einer weiteren Ausgestaltung des Dämpfungselements der erfindungsgemäßen Dämpfungsanord- nung;
- Figur 7: eine Querschnittsansicht einer weiteren Ausgestaltung des Dämpfungselements der erfindungsgemäßen Dämpfungsanord- nung;
- Figur 8: eine Querschnittsansicht einer weiteren Ausgestaltung des Dämpfungselements der erfindungsgemäßen Dämpfungsanord- nung;
- Figur 9: eine Querschnittsansicht einer weiteren Ausgestaltung des Dämpfungselements der erfindungsgemäßen Dämpfungsanord- nung; und
- Figur 10: eine Querschnittsansicht einer weiteren Ausgestaltung des Dämpfungselements der erfindungsgemäßen Dämpfungsanord- nung.

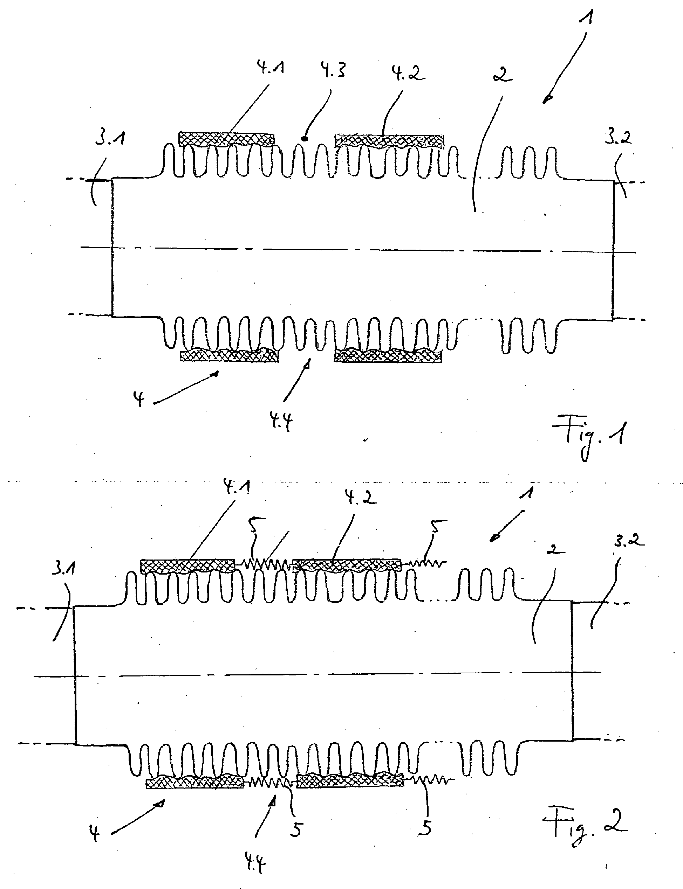

Figur 1 zeigt im Längsschnitt eine nicht erfindungsgemäße Dämpfungsanordnung 1 für eine Abgasanlage, insbesondere eines Kraftfahrzeugs. Diese umfasst einen metallischen Balg 2 zum Verbinden von Leitungsteilen 3.1, 3.2, beispielsweise Rohrteilen, der Abgasanlage. Weiterhin umfasst die Dämpfungsanordnung 1 gemäß dem vorliegenden Ausführungsbeispiel ein mehrteiliges Dämpfungselement 4, das in Form einer Mehrzahl von metallischen Drahtpressringen 4.1, 4.2 oder alternativ in Form einer Mehrzahl von nichtmetallischen Einzeldämpfungselementen (oder einer Mischung aus metallischen und nichtmetallischen Einzeldämpfungselementen) ausgebildet sein kann, wobei das Dämpfungselement 4 den Balg 2 zumindest abschnittweise im Bereich der Balgwellen umgibt und zum Dämpfen von Schwingungen des Balgs 2 durch Reibung an den Balg 2 ausgebildet ist.

Gemäß der Ausgestaltung in Figur 1 weist das Dämpfungselement 4 in Längsrichtung des Balgs 2 eine Unterbrechung 4.3 auf, so dass das Dämpfungselement 4 unter Schaffung der bereits erwähnten Mehrzahl von Einzeldämpfungselementen 4.1, 4.2, die vorliegend exemplarisch jeweils als separate Drahtpressringe ausgebildet sind, geteilt ist. Die Teilung erfolgt dabei an der Teilungsstelle 4.4, die örtlich mit einer Position der Unterbrechung 4.3 zusammenfällt.

Selbstverständlich ist die Dämpfungsanordnung 1 gemäß Figur 1 nicht auf das dargestellte Vorsehen von lediglich zwei Einzeldämpfungselementen 4.1, 4.2, die zusammen das Dämpfungselement 4 bilden, beschränkt. Vielmehr können in Richtung der Längserstreckung des Balges 2 weitere Einzeldämpfungselemente (nicht gezeigt) auf dem Balg 2 vorgesehen sein, auf diese Weise ein größeres, mehrfach geteiltes Dämpfungselement 4 zu bilden.

Bei Beschränkung auf lediglich zwei Einzeldämpfungselemente 4.1, 4.2, wie in Figur 1 dargestellt, kann das Dämpfungselement 4 in seiner Gesamtheit auch als einfach geteilt bezeichnet werden, da es lediglich eine Teilungsstelle 4.4 bzw. Unterbrechung 4.3 aufweist.

Durch die Ausgestaltung gemäß Figur 1 lassen sich gezielt Schwingungen der Abgasanlage an mehreren Resonanzstellen bedämpfen, ohne dass es hierzu in kostennachteiliger Weise erforderlich wäre, den Balg 2 auf seiner gesamten Länge mit einem durchgehenden Dämpfungselement, beispielsweise einem Drahtpressring, zu umgeben, der zudem nur unter erheblichem Aufwand zu montieren wäre.

Figur 2 zeigt eine Ausgestaltung der erfindungsgemäßen Dämpfungsanordnung 1, wobei vorliegend nur auf Unterschiede zur nicht erfindungsgemäßen Ausgestaltung gemäß Figur 1 explizit eingegangen wird. Gemäß der Ausgestaltung in Figur 2 ist an der Teilungsstelle 4.4 zwischen den Einzeldämpfungselementen 4.1, 4.2 ein elastisches Verbindungselement in Form einer Zugfeder 5 angeordnet, das die Unterbrechung 4.3 (vgl. die nicht erfindungsgemäße Ausgestaltung in Figur 1) des Dämpfungselements 4 an dieser Stelle überbrückt. Wie der Darstellung in Figur 2 aus darstellungstechnischen Gründen nicht zu entnehmen ist, können dabei über den Umfang des Balges 2 verteilt mehrere Zugfedern 5 zum Koppeln der Einzeldämpfungselemente 4.1, 4.2 vorgesehen sein. Wie im rechten Teil der Abbildung weiterhin zu erkennen ist, kann das Einzeldämpfungselement 4.2 über weitere Zugfedern 5 mit weiteren Einzeldämpfungselementen (nicht gezeigt) des Dämpfungselements 4 gekoppelt sein. Die einzelnen elastischen Verbindungselemente bzw. Zugfedern 5 sind dabei direkt an einander zugewandten Stirnseiten der Einzeldämpfungselemente 4.1, 4.2 befestigt.

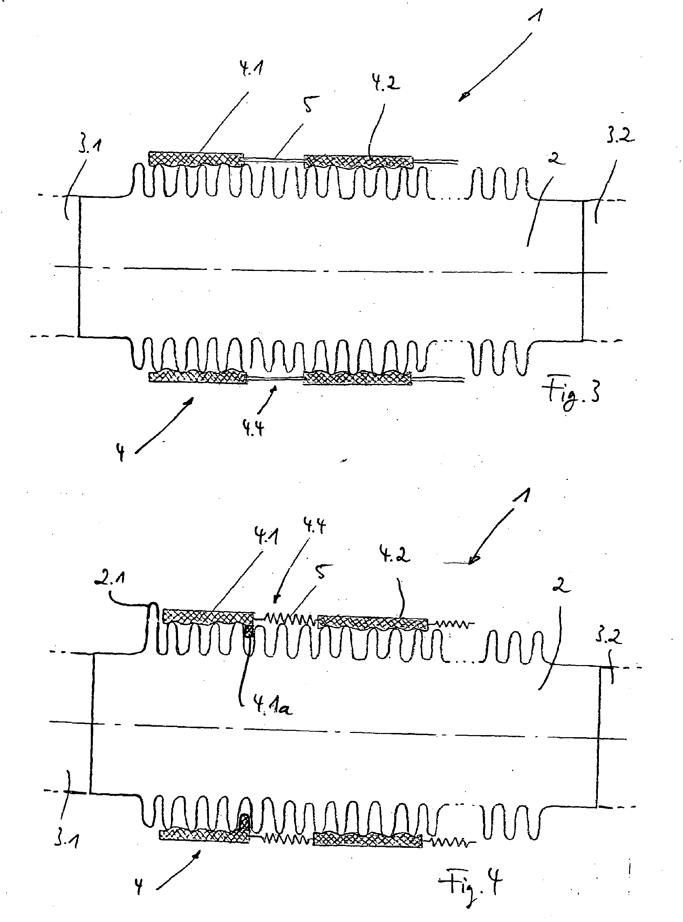

Figur 3 zeigt eine weitere Ausgestaltung der erfindungsgemäßen Dämpfungsanordnung 1, die sich von der Ausgestaltung gemäß Figur 2 dadurch unterscheidet, dass die elastischen Verbindungselemente 5 nicht als Zugfedern sondern als Teile oder Abschnitte aus einem elastomeren Material ausgebildet sind, dass die Einzeldämpfungselemente 4.1, 4.2 nach Art eines "Gummibands" verbindet.

Figur 4 zeigt anhand einer Darstellung, die im Wesentlichen derjenigen in Figur 1 entspricht, eine weitere Ausgestaltung der erfindungsgemäßen Dämpfungsanordnung 1. Bei dieser Ausgestaltung ist das endständige (linke) Einzeldämpfungselement 4.1 in Längsrichtung des Balgs 2 relativ zu diesem im Wesentlichen festgelegt, so dass eine reibende Beweglichkeit der Einzeldämpfungselemente nur für das weitere Einzeldämpfungselement 4.2 und gegebenenfalls vorhandene weitere Einzeldämpfungselemente (nicht gezeigt) gegeben ist, wodurch sich das Dämpfungsverhalten der Dämpfungsanordnung 1 gezielt einstellen lässt. Zum Festlegen des Einzeldämpfungselements 4.1 weist der Balg 2 endständig eine erhöhte Balgwelle 2.1 auf, welche die Beweglichkeit des Einzeldämpfungselements 4.1 nach links begrenzt. Des Weiteren weist das Einzeldämpfungselement 4.1 an seiner der erhöhten Balgwelle 2.1 abgewandten Seite eine Umbiegung 4.1a auf, die im Wesentlichen formschlüssig in einen Bereich zwischen zwei Balgwellen des Balgs 2 eingreift. Auf diese Weise findet eine weitere Festlegung des Einzeldämpfungselements 4.1 in axialer Richtung der Dämpfungsanordnung 1 statt.

Wie der Fachmann erkennt, kann es im Einzelfall ausreichend sein, zur axialen Festlegung der Einzeldämpfungselemente 4.1, 4.2 jeweils nur eine der vorstehend beschriebenen Maßnahmen vorzusehen. Eine weitere - zusätzliche oder alternative - Möglichkeit zur Festlegung der einzelnen Dämpfungselemente 4.1, 4.2 an den Balg 2 besteht in einem Vorsehen von Ringteilen, die den Balg 2 im Bereich eines Wellentals des Balges umgreifen und nach Art der erhöhten Balgwelle 2.1 über den maximalen Außendurchmesser des Balgs hinausragen, was in Figur 4 nicht weiter dargestellt ist.

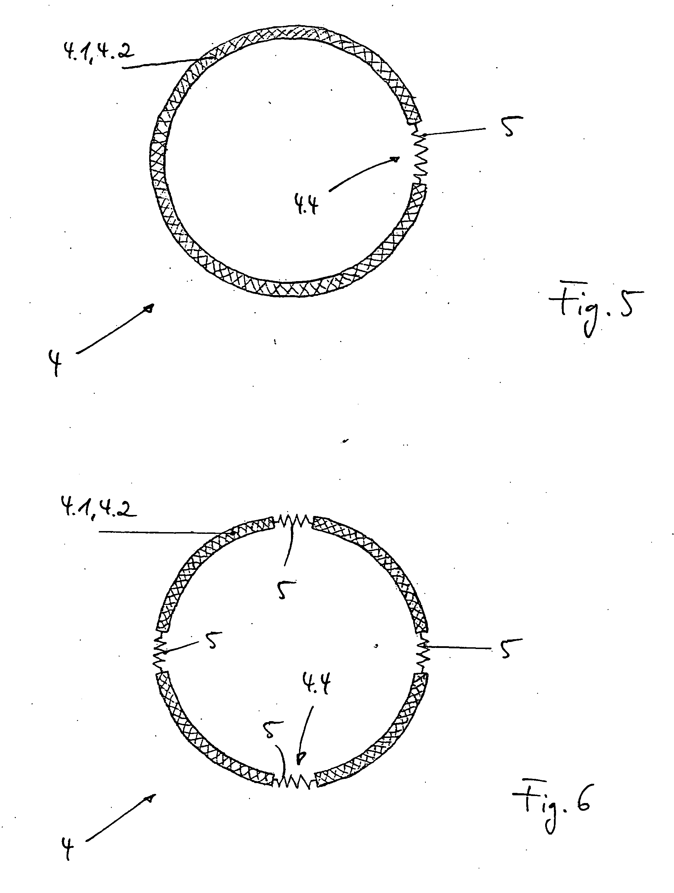

Erfindungsgemäß kann die Unterteilung des Dämpfungselements 4 nicht nur in Längsrichtung (vgl. Figuren 2 bis 4 sowie die nicht erfindungsgemäße Ausgestaltung in Figur 1), sondern zusätzlich oder alternativ auch in Umfangsrichtung erfolgen. Verschiedene Ausgestaltungen einer derartigen Unterteilung sind nachfolgend anhand der Figuren 5 bis 10 beschrieben:

Figur 5 zeigt einen Querschnitt durch eine entsprechende Ausgestaltung des Dämpfungselements 4 bzw. eines der Einzeldämpfungselemente 4.1, 4.2 gemäß den Figuren 2 bis 4 sowie der nicht zur Erfindung gehörigen Ausgestaltung gemäß Figur 1. Dieses kann wiederum als metallischer Drahtpressring oder als nichtmetallisches Dämpfungselement ausgebildet sein und ist vorliegend in Umfangsrichtung an der Teilungsstelle 4.4 einfach geteilt, wodurch eine Unterbrechung des Dämpfungselements 4 (vgl. die nicht erfindungsgemäße Ausgestaltung in Figur 1) geschaffen ist. Wie bereits oben anhand der Figuren 2 bis 4 ausführlich beschrieben, ist an der Teilungsstelle 4.4 ein elastisches Verbindungselement 5 in Form einer Zugfeder angeordnet, das die Unterbrechung des Dämpfungselements 4 überbrückt. Dabei ist das elastische Verbindungselement 5 wiederum direkt mit dem Dämpfungselement 4 verbunden.

In axialer Richtung, das heißt senkrecht zur Blattebene der Figur 5 können mehre elastische Verbindungselemente 5 hintereinander angeordnet sein. Bei einer alternativen Ausgestaltung der vorliegenden Variante können als elastisches Verbindungselement 5 statt Zugfedern auch Drehfedern zum Einsatz kommen.

Figur 6 zeigt eine weitere Ausgestaltung des Dämpfungselements 4 der erfindungsgemäßen Dämpfungsanordnung, das in Umfangsrichtung mehrfach geteilt ist. An jeder der Teilungsstellen 4.4, von denen in Figur 6 nur eine explizit bezeichnet ist, ist wiederum ein elastisches Verbindungselement 5 in Form einer Zug- oder Drehfeder vorgesehen, das die entsprechende Unterbrechung des Dämpfungselements 4 überbrückt, wie weiter oben ausführlich beschrieben.

Gemäß der Ausgestaltung in Figur 6 sind die Teilungsstellen 4.4 gleichmäßig über den Umfang des Dämpfungselements 4 verteilt, was jedoch nicht zwingend der Fall sein muss.

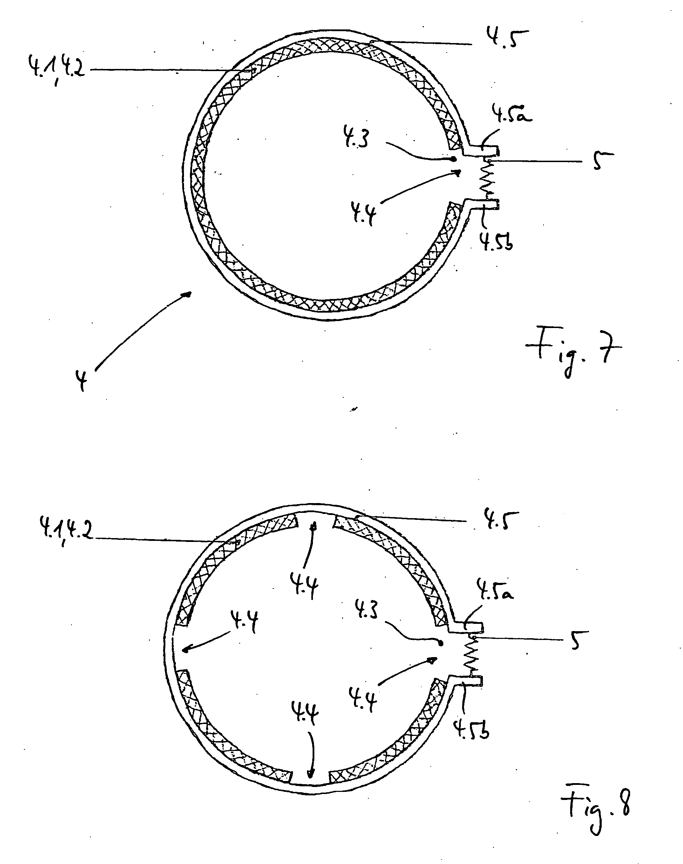

Figur 7 zeigt eine weitere Ausgestaltung des Dämpfungselements 4 der erfindungsgemäßen Dämpfungsanordnung. Das Dämpfungselement 4 ist wie bei der Ausgestaltung gemäß Figur 5 in Umfangsrichtung einfach geteilt ausgebildet (Teilungsstelle 4.4), weist jedoch zur Fixierung auf dem Balg (in Figur 7 nicht dargestellt) ein äußeres Fixierungselement 4.5 auf, das vorliegend schellenartig als Metallband ausgebildet ist, welches das Dämpfungselement 4 in Umfangsrichtung umfasst. Dabei ist das Fixierungselement 4.5 so auf dem Balg bzw. auf dem Dämpfungselement 4 angeordnet, dass seine Öffnung 4.6 mit der Unterbrechung 4.3 des Dämpfungselements 4 im Bereich der Teilungsstelle 4.4 zusammenfällt. Zum Überbrücken der Unterbrechung 4.3 des Dämpfungselements 4 ist wiederum ein elastisches Verbindungselement 5 in Form einer Zugfeder vorgesehen, die jedoch beim Gegenstand der Figur 7 nicht direkt an dem Drahtpressring oder dem nichtmetallischen Dämpfungselement sondern an dem Fixierungselement 4.5 angebracht ist, das zu diesem Zweck Abwinkelungen 4.5a, 4.5b aufweist.

Abweichend von der in Figur 7 gezeigten Ausgestaltung kann das Fixierungselement 4.5 auch als Drahtbügel (nicht gezeigt) ausgebildet sein, der den Drahtpressring bzw. das nichtmetallische Dämpfungselement in Umfangsrichtung umgibt und im Bereich der Teilungsstelle 4.4 durch Ineinanderhaken seiner Enden elastisch geschlossen ist.

Bei der Ausgestaltung gemäß Figur 8 ist das Dämpfungselement 4 analog zu der Ausgestaltung gemäß Figur 6 in Umfangsrichtung mehrfach unterteilt; die Fixierung an dem Balg (nicht gezeigt) erfolgt, wie vorstehend unter Bezugnahme auf die Figur 4 beschrieben. Die durch die Mehrfachunterteilung des Dämpfungselements 4 resultierenden Einzeldämpfungselemente oder Dämpfungselementabschnitte sind an dem Fixierungselement 4.5 befestigt und lassen sich so zusammen mit diesem an dem Balg montieren.

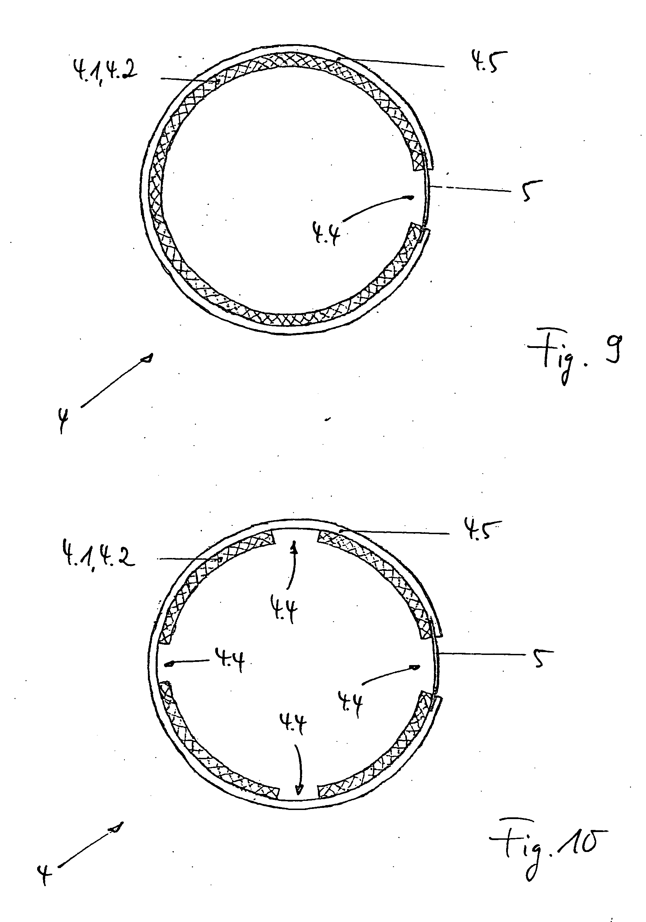

Die Figur 9 zeigt eine weitere Ausgestaltung des Dämpfungselements 4 der erfindungsgemäßen Dämpfungsanordnung, die größtenteils derjenigen gemäß Figur 7 entspricht. Zum Überbrücken der Teilungsstelle 4.4 kommt dabei analog zur Ausgestaltung gemäß Figur 3 ein Teil oder Abschnitt aus einem elastomeren Material als elastisches Verbindungselement 5 zum Einsatz. Dieses ist im Bereich der Teilungsstelle 4.4 zwischen dem Fixierungselement 4.5 und dem Drahtpressring oder nichtmetallischen Dämpfungselement 4.1, 4.2 klemmend gehalten.

Figur 10 zeigt eine Weiterbildung mit Ausgestaltung gemäß Figur 9, bei der das Dämpfungselement 4 analog zur Ausgestaltung gemäß Figur 8 über seinen Umfang mehrfach unterteilt ist. Die Überbrückung der jeweiligen Teilungsstellen 4.4 erfolgt dabei wie bei der Ausgestaltung in Figur 9 mittels eines Elastomerbandes 5 oder dergleichen.

Bei Verwendung der beschriebenen Ausgestaltungen der erfindungsgemäßen Dämpfungsanordnung in einer Abgasanlage, insbesondere bei einem Kraftfahrzeug, lassen sich Schwingungen effizient auch an mehreren Resonanzstellen bedämpfen. ohne dass hierzu ein langes, durchgängiges und entsprechend kostenaufwandiges bzw. schwer zu fixierendes Dämpfungselement verwendet werden muss. Die erfindungsgemäße Dämpfungsanordnung weist demnach neben inhärenten Kostenvorteilen auch Vorteile beim Verschleiß und bei der Dämpfungswirkung auf, die sich zudem über die Art, Anzahl und Eigenschaften der elastischen Verbindungselemente gezielt einstellen lassen.

## Patentansprüche

1. Dämpfungsanordnung (1) für eine Abgasanlage, insbesondere eines Kraftfahrzeugs, mit einem metallischen Balg (2) zum Verbinden von Leitungsteilen (3.1, 3.2) der Abgasanlage und mit einem Dämpfungselement (4), das den Balg (2) zumindest abschnittsweise umgibt und das für eine Dämpfung von Schwingungen des Balgs (2) durch Reibung an dem Balg (2) ausgebildet ist, wobei das Dämpfungselement (4) in Umfangsrichtung und/oder in Längsrichtung des Balgs (2) an wenigstens einer Teilungsstelle (4.4) unter Schaffung wenigstens einer Unterbrechung (4.3) des Dämpfungselements (4) und ggf. unter Schaffung einer Mehrzahl von Einzeldämpfungselementen (4.1, 4.2) geteilt ist,
**dadurch gekennzeichnet, dass** an der Teilungsstelle (4.4) wenigstens ein elastisches Verbindungselement (5) angeordnet ist, das die Unterbrechung (4.3) des Dämpfungselements (4) überbrückt.

2. Dämpfungsanordnung (1) nach Anspruch 1, **dadurch gekennzeichnet, dass** das Dämpfungselement (4) einfach geteilt ist.

3. Dämpfungsanordnung (1) nach Anspruch 1, **dadurch gekennzeichnet, dass** das Dämpfungselement (4) mehrfach geteilt ist.

4. Dämpfungsanordnung (1) nach einem der Ansprüche 1 bis 3, **dadurch gekennzeichnet, dass** das Verbindungselement (5) als Federelement, insbesondere als Zug- oder Drehfeder, oder als Teil aus einem elastomeren Material ausgebildet ist.

5. Dämpfungsanordnung (1) nach einem der Ansprüche 1 bis 4, **dadurch gekennzeichnet, dass** das Verbindungselement (5) an einem das Dämpfungselement (4) bzw. die Einzeldämpfungselemente (4.1, 4.2) in Umfangsrichtung umfassenden Fixierungselement (4.5), insbesondere einem Metallband angebracht ist, das im Bereich der Teilungsstelle (4.4) unter Schaffung wenigstens einer Unterbrechung (4.6) des Fixierungselements (4.5) geteilt ist.

6. Dämpfungsanordnung (1) nach einem der Ansprüche 1 bis 4, **dadurch gekennzeichnet, dass** das Verbindungselement (5) als ein das Dämpfungselement (4) bzw. die Einzeldämpfungselemente (4.1, 4.2) in Umfangsrichtung umfassendes Fixierungselement (4.5), insbesondere in Form eines Drahtbügels ausgebildet ist.

7. Dämpfungsanordnung (1) nach Anspruch 5 oder 6, **dadurch gekennzeichnet, dass** das Dämpfungselement (4) bzw. die Einzeldämpfungselemente (4.1, 4.2) an dem Fixierungselement (4.5) festgelegt sind.

8. Dämpfungsanordnung (1) nach einem der vorhergehenden Ansprüche, **dadurch gekennzeichnet, dass** eine Mehrzahl von Unterbrechungen (4.3) des Dämpfungselements (4) gleichmäßig über dessen Umfang und/oder Längserstreckung verteilt sind.

9. Dämpfungsanordnung (1) nach einem der vorhergehenden Ansprüche, **dadurch gekennzeichnet, dass** bei einer Mehrzahl von Unterbrechungen (4.3) des Dämpfungselements (4) jeweils wenigstens ein elastisches Verbindungselement (5) vorgesehen ist, das die betreffende Unterbrechung (4.3) des Dämpfungselements (4) überbrückt.

10. Dämpfungsanordnung (1) nach einem der vorhergehenden Ansprüche, **dadurch gekennzeichnet, dass** das Dämpfungselement (4) bzw. wenigstens eines der Einzeldämpfüngselemente (4.1, 4.2) als Geflechtring oder Drahtpressring ausgebildet ist.

11. Dämpfungsanordnung (1) nach einem der vorhergehenden Ansprüche, **dadurch gekennzeichnet, dass** das Dämpfungselement (4) bzw. wenigstens eines der Einzeldämpfungselemente (4.1, 4.2) als nichtmetallisches Dämpfungselement ausgebildet ist.

12. Dämpfungsanordnung (1) nach einem der vorhergehenden Ansprüche, **dadurch gekennzeichnet, dass** das Dämpfungselement (4) bzw. wenigstens eines der Einzeldämpfungselemente (4.1, 4.2) an dem Balg (2) festgelegt ist.

13. Dämpfungsanordnung (1) nach einem der vorhergehenden Ansprüche, **dadurch gekennzeichnet, dass** das Dämpfungselement (4) bzw. wenigstens eines der Einzeldämpfungselemente (4.1, 4.2) an einer Resonanzstelle des Balgs (2) angeordnet ist.

## Claims

1. Damping arrangement (1) for an exhaust system, especially of a motor vehicle, having a metal bellows (2) for connecting duct parts (3.1, 3.2) of the exhaust system and having a damping element (4) which surrounds the bellows (2) at least over sections thereof and which is constructed for damping vibrations of the bellows (2) by friction against the bellows (2), the damping element (4) being divided in the circumferential direction and/or in the longitudinal direction of the bellows (2) at at least one division point (4.4) to create at least one gap (4.3) in the damping element (4) and optionally to create a plurality of individual damping elements (4.1, 4.2),
**characterised in that** at the division point (4.4) there is arranged at least one resilient connecting element (5) which bridges the gap (4.3) in the damping element (4).

2. Damping arrangement (1) according to claim 1, **characterised in that** the damping element (4) has a single division.

3. Damping arrangement (1) according to claim 1, **characterised in that** the damping element (4) has a plurality of divisions.

4. Damping arrangement (1) according to any one of claims 1 to 3, **characterised in that** the connecting element (5) is in the form of a spring element, especially in the form of a tension spring or leg spring, or is in the form of a part made of an elastomeric material.

5. Damping arrangement (1) according to any one of claims 1 to 4, **characterised in that** the connecting element (5) is mounted on a fixing element (4.5), especially a metal strip, which encompasses the damping element (4) or the individual damping elements (4.1, 4.2) in the circumferential direction, which fixing element is divided in the region of the division point (4.4) to create at least one gap (4.6) in the fixing element (4.5).

6. Damping arrangement (1) according to any one of claims 1 to 4, **characterised in that** the connecting element (5) is in the form of a fixing element (4.5) which encompasses the damping element (4) or the individual damping elements (4.1, 4.2) in the circumferential direction, especially in the form of a wire clip.

7. Damping arrangement (1) according to claim 5 or 6, **characterised in that** the damping element (4) or the individual damping elements (4.1, 4.2) are fixed in position on the fixing element (4.5).

8. Damping arrangement (1) according to any one of the preceding claims, **characterised in that** a plurality of gaps (4.3) in the damping element (4) are distributed uniformly around its circumference and/or over its length.

9. Damping arrangement (1) according to any one of the preceding claims, **characterised in that** in the case of a plurality of gaps (4.3) in the damping element (4) there is provided in each case at least one resilient connecting element (5) which bridges the gap (4.3) in question in the damping element (4).

10. Damping arrangement (1) according to any one of the preceding claims, **characterised in that** the damping element (4) or at least one of the individual damping elements (4.1, 4.2) is in the form of a braided ring or pressed wire ring.

11. Damping arrangement (1) according to any one of the preceding claims, **characterised in that** the damping element (4) or at least one of the individual damping elements (4.1, 4.2) is in the form of a non-metallic damping element.

12. Damping arrangement (1) according to any one of the preceding claims, **characterised in that** the damping element (4) or at least one of the individual damping elements (4.1, 4.2) is fixed in position on the bellows (2).

13. Damping arrangement (1) according to any one of the preceding claims, **characterised in that** the damping element (4) or at least one of the individual damping elements (4.1, 4.2) is arranged at a point of resonance of the bellows (2).

## Revendications

1. Dispositif d'amortissement (1) pour un système d'échappement, en particulier d'un véhicule automobile, avec un soufflet métallique (2) pour relier des tronçons de conduite (3.1, 3.2) du système d'échappement, et avec un élément d'amortissement (4) qui entoure au moins sectoriellement le soufflet (2) et qui est conçu pour amortir les vibrations du soufflet (2) en frottant contre le soufflet (2), sachant que l'élément d'amortissement (4) est divisé, dans la direction circonférentielle et/ou dans la direction longitudinale du soufflet (2), en au moins un point de séparation (4.4) en créant au moins une interruption (4.3) de l'élément d'amortissement (4) et le cas échéant en créant une pluralité d'éléments d'amortissement individuels (4.1, 4.2),
**caractérisé en ce qu'**au moins un élément de liaison élastique (5) est disposé au point de séparation (4.4), élément qui surmonte l'interruption (4.3) de l'élément d'amortissement (4).

2. Dispositif d'amortissement (1) selon la revendication 1, **caractérisé en ce que** l'élément d'amortissement (4) est divisé une seule fois.

3. Dispositif d'amortissement (1) selon la revendication 1, **caractérisé en ce que** l'élément d'amortissement (4) est divisé plusieurs fois.

4. Dispositif d'amortissement (1) selon l'une des revendications 1 à 3, **caractérisé en ce que** l'élément de liaison (5) est conçu comme élément formant ressort, en particulier comme ressort de traction ou de torsion, ou comme élément constitué d'un matériau élastomère.

5. Dispositif d'amortissement (1) selon l'une des revendications 1 à 4, **caractérisé en ce que** l'élément de liaison (5) est installé sur un élément de fixation (4.5), en particulier une bande de métal, qui entoure en direction circonférentielle l'élément d'amortissement (4) ou les éléments d'amortissement individuels (4.1, 4.2) et qui est divisé dans la région du point de séparation (4.4) en créant au moins une interruption (4.6) de l'élément de fixation (4.5).

6. Dispositif d'amortissement (1) selon l'une des revendications 1 à 4, **caractérisé en ce que** l'élément de liaison (5) est réalisé sous la forme d'un élément de fixation (4.5) qui entoure en direction circonférentielle l'élément d'amortissement (4) ou les éléments d'amortissement individuels (4.1, 4.2), en particulier sous la forme d'un arceau en fil métallique.

7. Dispositif d'amortissement (1) selon la revendication 5 ou 6, **caractérisé en ce que** l'élément d'amortissement (4) ou les éléments d'amortissement individuels (4.1, 4.2) sont fixés sur l'élément de fixation (4.5).

8. Dispositif d'amortissement (1) selon l'une des revendications précédentes, **caractérisé en ce qu'**une pluralité d'interruptions (4.3) de l'élément d'amortissement (4) sont uniformément réparties sur sa circonférence et/ou sur son étendue longitudinale.

9. Dispositif d'amortissement (1) selon l'une des revendications précédentes, **caractérisé en ce que**, en présence d'une pluralité d'interruptions (4.3) de l'élément d'amortissement (4), il est chaque fois prévu au moins un élément de liaison élastique (5) qui surmonte l'interruption concernée (4.3) de l'élément d'amortissement (4).

10. Dispositif d'amortissement (1) selon l'une des revendications précédentes, **caractérisé en ce que** l'élément d'amortissement (4) ou au moins un des éléments d'amortissement individuels (4.1, 4.2) est réalisé sous forme d'anneau tressé ou d'anneau de serrage en fil métallique.

11. Dispositif d'amortissement (1) selon l'une des revendications précédentes, **caractérisé en ce que** l'élément d'amortissement (4) ou au moins un des éléments d'amortissement individuels (4.1, 4.2) est réalisé sous forme d'élément d'amortissement non métallique.

12. Dispositif d'amortissement (1) selon l'une des revendications précédentes, **caractérisé en ce que** l'élément d'amortissement (4) ou au moins un des éléments d'amortissement individuels (4.1, 4.2) est fixé sur le soufflet (2).

13. Dispositif d'amortissement (1) selon l'une des revendications précédentes, **caractérisé en ce que** l'élément d'amortissement (4) ou au moins un des éléments d'amortissement individuels (4.1, 4.2) est disposé en un point de résonance du soufflet (2).
